(19) Europäisches Patentamt European Patent Office Office européen des brevets

(11) **EP 4 641 922 A1**

(12) **EUROPÄISCHE PATENTANMELDUNG**

(43) Veröffentlichungstag:
**29.10.2025  Patentblatt 2025/44**

(21) Anmeldenummer: **24172027.5**

(22) Anmeldetag: **23.04.2024**

(51) Internationale Patentklassifikation (IPC):
***H02S 50/10*** *(2014.01)*

(52) Gemeinsame Patentklassifikation (CPC):
**H02S 50/10**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **FRONIUS INTERNATIONAL GmbH
4643 Pettenbach (AT)**

(72) Erfinder:
- **Pfeil, Reimar**
  **4643 Pettenbach (AT)**
- **Hackl, David**
  **4643 Pettenbach (AT)**
- **Kreuzer, Harald**
  **4643 Pettenbach (AT)**
- **Klement, Patrick**
  **4643 Pettenbach (AT)**

(74) Vertreter: **Bratovic, Nino Maria
Bratovic IP
Lissi-Kaeser-Straße 20
80797 München (DE)**

(54) **VORRICHTUNG UND VERFAHREN ZUM BETREIBEN EINER PHOTOVOLTAIK-ANLAGE**

(57)     Die Erfindung schafft eine Vorrichtung sowie ein Verfahren zum Betreiben einer Photovoltaikanlage (1000). Das Verfahren umfasst zumindest die Schritte:
Erfassen (S10) eines Stromwerts in der PhotovoltaikAnlage (1000);
Berechnen (S20) eines Schätzwerts für eine elektrische Leistung eines möglichen Lichtbogens (1) in der PhotovoltaikAnlage (1000) unter Verwendung eines Modells, wobei der erfasste Stromwert als eine Eingangsgröße des Modells verwendet wird;
Anpassen (S30) einer Detektionshöchstzeitdauer ($T_{max}$, $T_{max,2}$) in Abhängigkeit von dem berechneten Schätzwert für die elektrische Leistung;
Detektieren (S40) eines Warnzustands (W), welcher ein mögliches Auftreten eines Lichtbogens (1) in der PhotovoltaikAnlage (1000) anzeigt;
Fortlaufendes Messen (S50) einer Zeitdauer (td) des detektierten Warnzustands (W);
Auslösen (S70) einer Sicherheitsprozedur, wenn die fortlaufend gemessene Zeitdauer (td) des detektierten Warnzustands (W) die Detektionshöchstzeitdauer ($T_{max}$, $T_{max,2}$) erreicht; und
Zurücksetzen (S80) des Messens (S50) der Zeitdauer (td) des detektierten Warnzustands (W), wenn der detektierte Warnzustand (W) endet.

Fig. 1

EP 4 641 922 A1

**Beschreibung**

Gebiet der Erfindung

Die Erfindung betrifft eine Vorrichtung und ein Verfahren zum Betreiben einer Photovoltaik-Anlage, insbesondere im Fall eines möglichen (d.h. scheinbaren oder tatsächlichen) Auftretens eines Lichtbogens.

Technischer Hintergrund

In Photovoltaik-Anlagen kann es immer wieder zu Lichtbögen kommen. Es existieren umfangreiche normative Vorschriften, welche Vorgaben machen, wie schnell ein Lichtbogen zu löschen ist und wie häufig ein solches Ereignis eintreten darf, ehe weiter gehende Maßnahmen erforderlich werden, etwa ein längerfristiges Abschalten der Photovoltaik-Anlage, eine Wartung durch eine Fachperson, und dergleichen mehr.

Während einerseits die jeweils gültigen Vorschriften eingehalten werden müssen, besteht andererseits ein Interesse daran, dass Photovoltaik-Anlage möglichst ohne Einschränkungen dauerhaft in Betrieb gehalten werden können. Hierzu wird beispielsweise beständig an präziseren Methoden zur Erkennung von Lichtbögen gearbeitet, welche möglichst keine falschen Negativerkennungen / keine Fehldetektion (d.h. fehlende Erkennungen eines tatsächlich aufgetretenen Lichtbogens) und dabei möglichst wenig falsche Positiverkennungen (d.h. eine fehlerhafte Erkennung eines tatsächlich nicht aufgetretenen Lichtbogens) bewirken.

Prinzipiell soll dabei unter anderem ein Brand, ausgelöst durch einen Lichtbogen, verhindert werden. Da eine eindeutige Messung eines Lichtbogens bei echten Photovoltaik-Anlagen im Einsatz nicht möglich ist, sondern indirekte Verfahren zur Detektion von Lichtbögen verwendet werden müssen, kann es zu einem gewissen Prozentsatz zu Fehlentscheidungen (negativer sowie positiver Art) kommen. Bei einer Nicht-Detektion eines tatsächlichen Lichtbogens kann es zu einem Brand kommen. Bei einer Fehldetektion wo kein Lichtbogen brennt, kommt es zu einer Leistungsminderung/schlechte Kundenzufriedenheit. Daher ist es sinnvoll, den erlaubten Grenzen/Zeitraum für die Detektion auszunutzen.

Zur allgemeinen theoretischen Beschreibung eines Lichtbogens sind verschiedene Modelle bekannt, etwa aus den wissenschaftlichen Veröffentlichungen von Hertha Marks Ayrton, "The Electric Arc", New York, D. Van Nostrand Company, 1902; von J. Paukert, "The arc voltage and arc resistance of IV fault Arcs", in "Proceedings of the 7th International Symposium on Switching Arc Phenomena", 1993, Seiten 49-51; oder von A. D. Stokes und W. T. Oppenlander, "Electric arcs in open air", in "Journal of Physics D: Applied Physics", 1991, Seiten 26-35.

Gemäß einigen Normen muss eine Sicherheitsprozedur ausgelöst werden, wenn eine bestimmte Energieabgabe des Lichtbogens eingetreten ist. Während diese in einem Testaufbau präzise messbar ist, gestaltet sich dies bei Photovoltaik-Anlagen im Einsatz sehr schwierig.

Zusammenfassung der Erfindung

Es ist eine Aufgabe der vorliegenden Erfindung, ein verbessertes Verfahren und eine verbesserte Vorrichtung zum Betreiben von Photovoltaik-Anlage, insbesondere zur Behandlung von möglichen, d.h. scheinbaren oder tatsächlichen, Lichtbögen, bereitzustellen.

Diese Aufgabe wird durch die Gegenstände der unabhängigen Patentansprüche gelöst.

Dementsprechend wird gemäß einem ersten Aspekt ein Verfahren zum Betreiben einer Photovoltaikanlage bereitgestellt, mit den Schritten:

Erfassen eines Stromwerts in der Photovoltaik-Anlage;

Berechnen eines Schätzwerts für eine elektrische Leistung eines möglichen Lichtbogens in der Photovoltaik-Anlage unter Verwendung eines Modells, wobei der erfasste Stromwert als eine Eingangsgröße des Modells verwendet wird;

Anpassen einer Detektionshöchstzeitdauer in Abhängigkeit von dem berechneten Schätzwert für die elektrische Leistung;

Detektieren eines Warnzustands, welcher ein mögliches Auftreten eines Lichtbogens in der Photovoltaik-Anlage anzeigt (d.h. Feststellen, dass möglicherweise ein Lichtbogen aufgetreten ist);

Fortlaufendes Messen einer Zeitdauer des detektierten Warnzustands (d.h. Messen, wie lange der detektierte Warnzustand seit seiner Detektion bereits andauert);

Auslösen einer Sicherheitsprozedur (insbesondere zum Zweck des Löschens des möglichen Lichtbogens), wenn die fortlaufend gemessene Zeitdauer des detektierten Warnzustands die Detektionshöchstzeitdauer erreicht; und

Zurücksetzen des Messens der Zeitdauer des detektierten Warnzustands, wenn der detektierte Warnzustand endet (d.h., beim erneuten Auftreten eines weiteren Warnzustands wird dessen Zeitdauer wieder von null ab gemessen).

Eine grundlegende Idee der vorliegenden Erfindung ist es somit, dass in einem Warnzustand, d.h. wenn Hinweise für das Brennen eines Lichtbogens vorliegen, eine Sicherheitsprozedur dann ausgelöst wird (und zwar vorzugsweise erst genau dann), wenn seit dem Auftreten des Warnzustands eine Detektionshöchstzeitdauer verstrichen ist, die wiederum erfindungsgemäß nicht konstant ist, sondern angepasst wird. Die Detektionshöchstzeitdauer wird dabei in Abhängigkeit von einem berechneten Schätzwert für die elektrische Leistung des möglichen Lichtbogens angepasst, wobei die Detektionshöchstzeitdauer vorteilhaft monoton oder streng monoton mit dem berechneten Schätzwert für die elektrische Leistung des möglichen Lichtbogens sinkt. Die Detektionshöchstzeitdauer ist auch als "Auslösezeitdauer" bezeichenbar, da sie angibt, wann die Sicherheitsprozedur auszulösen ist.

Hierdurch können beispielsweise Vorgaben bezüglich einer maximalen Energie, welche der Lichtbogen abgeben darf, bevor die Sicherheitsprozedur ausgelöst werden muss, erfüllt werden. Dabei wird jedoch erfindungsgemäß besonders viel Zeit bereitgestellt, bevor dies geschieht. Diese - im Vergleich zum Stand der Technik - zusätzliche Zeit kann insbesondere dafür genutzt werden, weitere Messungen durchzuführen, etwa um mit größerer Sicherheit festzustellen, ob tatsächlich ein Lichtbogen vorliegt oder nicht, um zu ermöglichen, dass sich das Problem von selbst löst, und/oder um kurzzeitige Ereignisse in der Photovoltaik-Anlage besser in deren Kontext bewerten zu können. Durch diese zusätzliche Zeit wird somit insbesondere die Wahrscheinlichkeit verringert, dass aufgrund einer falsch-positiven Detektion eines Lichtbogens ein unnötiger störender Eingriff in die Funktion der Photovoltaik-Anlage erfolgt.

Bei der Beschreibung der vorliegenden Erfindung wird wiederholt der Begriff eines "möglichen Lichtbogens" verwendet. Dies ergibt sich daraus, dass im Kontext der vorliegenden Erfindung zunächst nur festgestellt wird, ob ein Warnzustand vorliegt, d.h., ein Zustand, in dem möglicherweise ein Lichtbogen aufgetreten sein könnte. Hierfür gibt es im Stand der Technik vielfältige Methoden (z.B. Spektralanalysen von Stromleitungen der Photovoltaik-Anlage), die hier allesamt verwendet werden können. Während des Warnzustands muss somit in den Berechnungen und dergleichen davon ausgegangen werden, dass ein Lichtbogen vorliegt, auch wenn dies möglicherweise tatsächlich gar nicht der Fall ist. Daher wird etwa von der Leistung eines möglichen Lichtbogens gesprochen, d.h. von der Leistung, die, wenn dem vorliegenden Warnzustand tatsächlich ein Lichtbogen zugrunde läge, dieser Lichtbogen hätte. Mit anderen Worten ist die "Leistung eines möglichen Lichtbogens" nicht die irgendeines beliebigen Lichtbogens, sondern die Leistung des konkreten Lichtbogens, der in dem Warnzustand sicherheitshalber vermutet wird.

Der Begriff der "Photovoltaik-Anlage", wie er hier verwendet wird, kann insbesondere alle Elemente umfassen, welche zwischen der einfallenden Sonnenstrahlung einerseits und einem Wechselstromausgang eines Wechselrichters andererseits angeordnet sind, also insbesondere Photovoltaik-Module, Modulelektroniken, Schutzgeräte (Leistungsschalter und dergleichen) sowie den Wechselrichter selbst.

Gemäß einigen bevorzugten Ausführungsformen, Varianten oder Verfeinerungen von Ausführungsformen wird die Detektionshöchstzeitdauer, zumindest wenn kein Warnzustand detektiert ist, kontinuierlich angepasst. Mit anderen Worten kann das Verfahren so eingerichtet sein, dass kontinuierlich ermittelt wird, welche Detektionshöchstzeitdauer aktuell vorliegt, also grob gesagt, wie lange ein Warnzustand aktuell vorliegen könnte, bevor die Sicherheitsprozedur ausgelöst werden müsste. Während eines Warnzustands, d.h. wenn aktuell ein Warnzustand detektiert ist, kann das Anpassen der Detektionshöchstzeitdauer unterbleiben. In diesem Fall kann beispielsweise die zuletzt angepasste Detektionshöchstzeitdauer als Zeit-Schwellwert verwendet werden, um zu prüfen, ob die Sicherheitsprozedur auszulösen ist oder nicht. In einigen Ausführungsformen kann das Anpassen der Detektionshöchstzeitdauer auch während eines Warnzustands weiter durchgeführt werden. Die jeweils letzte angepasste Detektionshöchstzeitdauer kann in diesem Fall auch eine während des Warnzustands angepasste Detektionshöchstzeitdauer sein.

Alternativ kann beim Auftreten eines Warnzustands ein zuvor gemessener und gespeicherter Stromwert verwendet werden, um die Detektionshöchstzeitdauer spezifisch für den vorliegenden Warnzustand zu berechnen.

Gemäß einigen bevorzugten Ausführungsformen, Varianten oder Verfeinerungen von Ausführungsformen wird in dem Modell, unter Verwendung des erfassten Stromwerts als Eingangsgröße, ein Schätzwert für die elektrische Spannung des möglichen Lichtbogens ermittelt. Der Schätzwert für die elektrische Leistung kann daraufhin unter Verwendung des erfassten Stromwerts und des Schätzwerts für die elektrische Spannung berechnet werden, insbesondere durch deren Multiplikation.

Gemäß einigen bevorzugten Ausführungsformen, Varianten oder Verfeinerungen von Ausführungsformen ist der erfasste Stromwert die einzige variable Eingangsgröße des Modells. Das Modell ist in diesem Fall verhältnismäßig leicht und schnell zu berechnen.

In alternativen Ausführungsformen, Varianten, oder Verfeinerungen von Ausführungsformen können neben dem erfassten Stromwert auch noch weitere Eingangsgrößen verwendet werden, beispielsweise eine Spannungsveränderung beim Auftreten des möglichen Lichtbogens, ein Hub des Leistungsdichtespektrums und/oder dergleichen mehr.

Gemäß einigen bevorzugten Ausführungsformen, Varianten oder Verfeinerungen von Ausführungsformen verwendet das Modell für das Berechnen des Schätzwerts für die elektrische Leistung des möglichen Lichtbogens eine Mehrzahl von Kandidaten-Untermodellen. Dabei kann jedes Kandidaten-Untermodell eine eigene Schätzung durchführen. Der Schätzwert des Modells für die elektrische Leistung kann auf mindestens einer der Schätzungen der Kandidaten-Untermodelle basieren. Beispielsweise kann die größte Schätzung (d.h., das Maximum), welche von einem der Kandidaten-Untermodelle erzeugt wird, als Schätzwert des Modells verwendet werden. Möglich ist aber auch, dass der Schätzwert des Modells aus den Schätzungen der Kandidaten-Untermodelle berechnet wird, beispielsweise als deren gleitender Durchschnitt oder Median, oder als ein bestimmtes Quantil x (also z.B. ein Wert, unterhalb dessen 100*x% der Schätzungen der Kandidaten-Untermodelle liegen, wobei der Median der Spezialfall des 0,5-Quantils ist).

Gemäß einigen bevorzugten Ausführungsformen, Varianten oder Verfeinerungen von Ausführungsformen wird die Detektionshöchstzeitdauer derart angepasst, dass durch ein Produkt des Schätzwerts für die elektrische Leistung des möglichen Lichtbogens mit der Detektionshöchstzeitdauer ein vorgegebener Elektrische-Energie-Schwellwert nicht überschritten wird. Mit anderen Worten kann die Detektionshöchstzeitdauer derart festgesetzt werden, dass der vorgegebene Elektrische-Energie-Schwellwert gerade erreicht wird, wenn der mögliche Lichtbogen die gesamte Detektionshöchstzeitdauer lang elektrische Leistung gemäß dem berechneten Schätzwert für die elektrische Leistung abgibt. Auf diese Weise können beispielsweise normative Vorgaben über eine maximale Energie, die der mögliche Lichtbogen vor dem Auslösen einer Sicherheitsprozedur abgeben darf, derart umgesetzt werden, dass möglichst viel Zeit zur Verfügung steht.

Gemäß einigen bevorzugten Ausführungsformen, Varianten oder Verfeinerungen von Ausführungsformen wird der Stromwert an einem Eingang eines Wechselrichters und/oder einer Modulelektronik und/oder eines Schutzgeräts der Photovoltaik-Anlage erfasst. Bei dem Stromwert kann es sich somit um einen Messwert handeln, welcher bevorzugt regelmäßig oder kontinuierlich erfasst (d.h., gemessen) wird.

Gemäß einigen bevorzugten Ausführungsformen, Varianten oder Verfeinerungen von Ausführungsformen ist der erfasste Stromwert ein durch die Photovoltaik-Anlage erzeugter Stromwert zu einem Zeitpunkt vor dem Auftreten des detektierten Warnzustands, beispielsweise der letzte vor dem Auftreten des detektierten Warnzustands (d.h., vor dem Beginn des Detektierens des Warnzustands) gemessene Stromwert, der höchste Stromwert in einem vordefinierten Zeitfenster vor dem Auftreten des detektierten Warnzustands, oder dergleichen.

Gemäß einigen bevorzugten Ausführungsformen, Varianten oder Verfeinerungen von Ausführungsformen wird der Stromwert regelmäßig oder kontinuierlich erfasst. Dementsprechend kann somit auch der Schätzwert für die elektrische Leistung entsprechend regelmäßig oder kontinuierlich berechnet werden, und somit kann auch die Detektionszeit vorteilhaft regelmäßig oder kontinuierlich angepasst werden, stets basierend auf dem aktuellsten Schätzwert für die elektrische Leistung, der wiederum stets auf dem aktuellsten erfassten (z.B. gemessenen) Stromwert basiert.

Gemäß einigen bevorzugten Ausführungsformen, Varianten oder Verfeinerungen von Ausführungsformen umfasst das Verfahren außerdem ein Verifizieren des detektierten Warnzustands in einem Zeitraum während dem die Zeitdauer des detektierten Warnzustands zwischen null und der Detektionshöchstzeitdauer beträgt. Bevorzugt wird der Warnzustand beendet, falls das Verifizieren ergibt, dass tatsächlich kein Lichtbogen vorliegt. Entsprechend bleibt der Warnzustand vorteilhaft bestehen, falls das Verifizieren kein ausreichend klares Ergebnis liefert oder das Vorliegen des Warnzustands bestätigt.

Alternativ kann ein Bestätigen des Warnzustands mit ausreichend hoher Wahrscheinlichkeit während des Verifizierens auch ein sofortiges Durchführen einer Sicherheitsprozedur (z.B. der nächsten, der mildesten, der schärfsten, oder einer anderen vorbestimmten Sicherheitsprozedur) auslösen.

Gemäß einem zweiten Aspekt stellt die Erfindung außerdem eine Vorrichtung zum Betreiben einer Photovoltaik-Anlage bereit, umfassend:
eine Strommesseinrichtung, welche dazu eingerichtet ist, einen Stromwert zu erfassen;

ein Leistungs-Schätzungsmodul, welches dazu eingerichtet ist, einen Schätzwert für eine elektrische Leistung eines möglichen (oder: etwaigen) Lichtbogens unter Verwendung eines Modells zu berechnen, wobei der erfasste Stromwert als eine Eingangsgröße des Modells verwendet wird;
ein Detektionshöchstzeitdauer-Anpassungsmodul, welches dazu eingerichtet ist, eine Detektionshöchstzeitdauer in Abhängigkeit von dem berechneten Schätzwert für die elektrische Leistung anzupassen;
ein Lichtbogen-Detektionsmodul, welches dazu eingerichtet ist, einen Warnzustand zu detektieren, welcher ein mögliches Auftreten eines Lichtbogens in der Photovoltaik-Anlage anzeigt;
eine Zeitmesseinrichtung, welche dazu eingerichtet ist, eine fortlaufende Zeitdauer des detektierten Warnzustands zu messen; und
eine Sicherheitseinrichtung, welche dazu eingerichtet ist:

- eine Sicherheitsprozedur (insbesondere zum Zweck des Löschens des möglichen Lichtbogens) auszuführen, wenn die fortlaufend gemessene Zeitdauer des detektierten Warnzustands die Detektionshöchstzeitdauer erreicht und
- das Messen der Zeitdauer des detektierten Warnzustands durch die Zeitmesseinrichtung zurückzusetzen, wenn der detektierte Warnzustand endet (beispielsweise nicht mehr länger detektiert wird).

Die Vorrichtung gemäß jeglicher Ausführungsform des zweiten Aspekts kann gemäß allen in Bezug auf das Verfahren gemäß dem ersten Aspekt beschriebenen Ausführungsformen, Varianten oder Verfeinerungen von Ausführungsformen angepasst werden und umgekehrt.

Wenn hierin von "Modulen" oder "Einrichtungen" die Rede ist, versteht es sich, dass dies nicht notwendiger Weise bedeutet, dass solche Module oder Einrichtungen als separate Einheiten getrennt voneinander ausgebildet sind. Alle Module und/oder Einrichtungen können in Hard- und/oder Software ausgebildet sein.

In Fällen, in denen Module oder Einrichtungen als Software ausgebildet sind können die Module oder Einrichtungen als Programmcode-Abschnitte oder Programmcode-Bestandteile realisiert sein, welche voneinander unterscheidbar sein können, aber welche auch ineinander verwoben sein können. Ebenso gilt, dass in Fällen, in denen ein oder mehrere Module oder Einrichtungen als Hardware realisiert sind, die Funktionen eines oder mehrerer Module oder Einrichtungen durch eine und dieselbe Hardware-Komponente realisiert sein können. Alternativ oder zusätzlich können verschiedene Funktionen eines einzelnen Moduls oder einer einzelnen Einrichtung, oder auch verschiedene Funktionen verschiedener Module oder verschiedener Einrichtungen, auf ein oder mehreren separaten Hardware-Komponenten realisiert werden, die mit den Modulen bzw. Einrichtungen somit nicht notwendiger Weise in einem Eins-zu-Eins-Verhältnis stehen müssen.

In diesem Sinne kann jede Vorrichtung, jedes System, jedes Verfahren etc. welches alle Eigenschaften und Funktionen aufweist, welche einem bestimmen Modul oder einer bestimmten Einrichtungen zugeschrieben werden, so verstanden werden, dass sie bzw. es ein solches Modul bzw. Einrichtungen aufweist, darstellt, oder implementiert. Insbesondere kann es möglich sein, dass sämtliche Module und/oder Einrichtungen als Programmcode realisiert sind, welcher von einer Recheneinrichtung ausgeführt wird, z.B. von einem Server oder einer Cloud-Computing-Plattform.

Gemäß einigen bevorzugten Ausführungsformen, Varianten oder Verfeinerungen von Ausführungsformen ist die Strommesseinrichtung dazu eingerichtet, den Stromwert regelmäßig oder kontinuierlich zu erfassen;

das Leistungs-Schätzungsmodul dazu eingerichtet, den Schätzwert für die elektrische Leistung des möglichen (oder: etwaigen) Lichtbogens regelmäßig oder kontinuierlich unter Verwendung des erfassten Stromwerts zu berechnen; und/oder

das Detektionshöchstzeitdauer-Anpassungsmodul dazu eingerichtet, die Detektionshöchstzeitdauer in Abhängigkeit von dem berechneten Schätzwert für die elektrische Leistung regelmäßig oder kontinuierlich anzupassen.

Die Funktionen der Strommesseinrichtung, des Leistungs-Schätzungsmoduls, und des Detektionshöchstzeitdauer-Anpassungsmoduls, sind vorteilhaft zeitlich aneinander angepasst und erfolgen besonders vorteilhaft alle kontinuierlich oder alle mit derselben Regelmäßigkeit, beispielsweise alle D Millisekunden, wobei D vorteilhaft in einem Bereich zwischen 1 Millisekunde und 5 Millisekunden (die Randwerte mit eingeschlossen) liegen kann.

Gemäß einem dritten Aspekt stellt die vorliegende Erfindung einen Wechselrichter bereit, welcher die Vorrichtung nach einer der Ausführungsformen des zweiten Aspekts der vorliegenden Erfindung umfasst.

Gemäß einem vierten Aspekt stellt die vorliegende Erfindung eine Photovoltaik-Anlage bereit, welche die Vorrichtung nach einer Ausführungsform des zweiten Aspekts der vorliegenden Erfindung und/oder den Wechselrichter nach einer Ausführungsform des dritten Aspekts der vorliegenden Erfindung umfasst.

Gemäß einem fünften Aspekt stellt die vorliegende Erfindung ein Computerprogrammprodukt bereit, welches ausführbaren Programmcode umfasst, welcher, wenn er von einer Recheneinrichtung ausgeführt wird, das Verfahren gemäß einer Ausführungsform des ersten Aspekts der vorliegenden Erfindung durchführt.

Eine solche Recheneinrichtung kann als eine beliebige Vorrichtung realisiert sein oder werden, welche zum Rechnen, und insbesondere zum Ausführen einer Software, einer App, oder eines Algorithmus in der Lage ist. Die Recheneinrichtung kann beispielsweise mindestens eine Prozessoreinheit aufweisen, z. B. eine Zentralprozessoreinheit (CPU) und/oder eine Graphikprozessoreinheit (GPU) und/oder eine Feldprogrammierbare Logikschaltung (FPGA) und/oder eine anwendungsspezifische integrierte Schaltung (ASIC) und/oder eine Kombination davon. Die Recheneinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Recheneinrichtung kann ganz oder vollständig in einem lokalen Gerät und/oder ganz oder vollständig in einem entfernten System implementiert sein wie etwa in einem entfernt angeordneten Server und/oder einer Cloud-Computing-Plattform.

Gemäß einem sechsten Aspekt stellt die vorliegende Erfindung ein nicht-flüchtiges, computerlesbares Datenspeichermedium bereit, welches ausführbaren Programmcode umfasst, welcher, wenn er von einer Recheneinrichtung ausgeführt wird, das Verfahren gemäß einer Ausführungsform des ersten Aspekts der vorliegenden Erfindung durchführt.

Das Datenspeichermedium kann beispielsweise als ein Halbleiterspeicher, z. B. ein SSD-Speicherstein ausgebildet sein oder einen solchen aufweisen. Das Datenspeichermedium kann auch eine CD, DVD, Blu-Ray oder eine magnetische Speichervorrichtung aufweisen oder umfassen.

Gemäß einem siebten Aspekt stellt die vorliegende Erfindung einen Datenstrom bereit, welcher ausführbaren Programmcode umfasst oder zum Erzeugen von ausführbaren Programmcode ausgelegt ist, welcher, wenn er von einer Recheneinrichtung ausgeführt wird, das Verfahren gemäß einer Ausführungsform des ersten Aspekts der vorliegenden Erfindung durchführt.

Gemäß einem achten Aspekt stellt die vorliegende Erfindung eine Recheneinrichtung bereit, welche dazu eingerichtet ist, das Verfahren gemäß einer Ausführungsform des ersten Aspekts der vorliegenden Erfindung durchzuführen.

Weitere bevorzugte Ausführungsformen, Varianten und Weiterbildungen von Ausführungsformen ergeben sich aus den abhängigen Patentansprüchen sowie aus der Beschreibung unter Bezugnahme auf die Figuren.

Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:

Fig. 1     ein schematisches Blockdiagramm zum Erläutern einer Vorrichtung gemäß einer Ausführungsform der vorliegenden Erfindung sowie eines Wechselrichters und einer Photovoltaik-Anlage gemäß jeweils einer weiteren Ausführungsform der vorliegenden Erfindung;

Fig. 2     einen beispielhaften Graphen zur Erläuterung der Funktion der Vorrichtung aus Fig. 1;

Fig. 3     einen weiteren beispielhaften Graphen zur Erläuterung der Funktion der Vorrichtung aus Fig. 1

Fig. 4     Leistungsdichtespektren einerseits im Normalzustand, andererseits im Warnzustand der Vorrichtung aus Fig. 1;

Fig. 5     einen weiteren beispielhaften Graphen zur Erläuterung der Funktion der Vorrichtung aus Fig. 1;

Fig. 6     noch einen weiteren beispielhaften Graphen zur Erläuterung der Funktion der Vorrichtung aus Fig. 1;

Fig. 7     einen weiteren beispielhaften Graphen zur Erläuterung der Funktion der Vorrichtung aus Fig. 1;

Fig. 8     ein schematisches Flussdiagramm zur Erläuterung eines Verfahrens gemäß einer weiteren Ausführungsform der vorliegenden Erfindung;

Fig. 9     ein schematisches Blockdiagramm zur Erläuterung eines Computerprogrammprodukts gemäß noch einer weiteren Ausführungsform der vorliegenden Erfindung; und

Fig. 10     ein schematisches Blockdiagramm zur Erläuterung eines Datenspeichermediums gemäß noch einer weiteren Ausführungsform der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Nummerierung von Verfahrensschritten erfolgt vorrangig zu deren leichterer Unterscheidung und impliziert nicht zwangsläufig eine zeitliche Reihenfolge, obwohl eine zeitliche Reihenfolge gemäß der Reihenfolge der Nummerierung eine mögliche Variante darstellt. Verschiedene Verfahrensschritte können auch teilweise oder vollständig gleichzeitig miteinander ausgeführt werden. Auch ein mehrfaches oder iteratives Ausführen von Verfahrensschritten ist möglich.

Detaillierte Beschreibung der Figuren

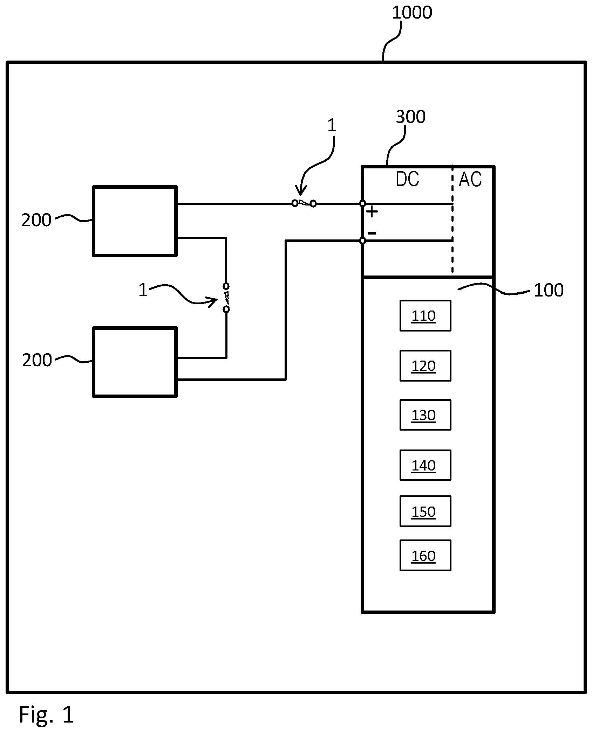

Fig. 1 zeigt ein schematisches Blockdiagramm zum Erläutern einer Vorrichtung gemäß einer Ausführungsform der vorliegenden Erfindung, d.h. einer Vorrichtung 100 zum Betreiben einer Photovoltaikanlage 1000. Somit zeigt Fig. 1 gleichzeitig auch eine Photovoltaik-Anlage 1000 gemäß einer Ausführungsform eines anderen Aspekts der vorliegenden Erfindung, sowie außerdem auch einen Wechselrichter 300 gemäß einer Ausführungsform eines weiteren Aspekts der vorliegenden Erfindung.

Die in Fig. 1 beispielhaft dargestellte Photovoltaik-Anlage 1000 umfasst mindestens ein Photovoltaik-Modul 200 und ist hier mit zwei Photovoltaik-Modulen 200 dargestellt, wobei die Photovoltaik-Anlage 1000 auch deutlich mehr Photovoltaik-Module 200 umfassen kann. Die Photovoltaik-Anlage 1000 umfasst außerdem einen Wechselrichter 300, welcher dazu eingerichtet ist, den von den Photovoltaik-Modulen 200 (oder von mindestens einem Photovoltaik-Modul 200) empfangenen Gleichstrom, DC, in einen Wechselstrom, AC, zu wandeln. Die Photovoltaik-Anlage 1000 kann auch weitere Wechselrichter 300 umfassen sowie weitere Elemente, wie beispielsweise Modulelektroniken an den Photovoltaik-Modulen 200, Schutzgeräte und dergleichen mehr.

Weiterhin umfasst die Photovoltaik-Anlage 1000 eine Vorrichtung 100 zum Betreiben der Photovoltaik-Anlage 1000, deren Funktionsweise im Folgenden näher erläutert wird. In Fig. 1 ist die Vorrichtung 100 als an oder in dem (oder einem der) Wechselrichter 300 angeordnet dargestellt. Die Vorrichtung 100 kann jedoch auch an einem anderen Gerät oder auch verteilt angeordnet sein.

Die Vorrichtung 100 umfasst mindestens eine Strommesseinrichtung 110, welche dazu eingerichtet ist, einen Stromwert zu erfassen. Der Stromwert kann beispielsweise an einem Eingang des Wechselrichters 300, an einer Modulelektronik und/oder an einem Schutzgerät der Photovoltaik-Anlage 1000 gemessen werden. Das Erfassen des Stromwerts kann regelmäßig oder kontinuierlich erfolgen, wie im Vorangehenden bereits erläutert wurde, und zwar insbesondere dann (und optional auch nur dann), wenn aktuell kein Warnzustand vorliegt, welcher auf einen möglichen Lichtbogen 1 hinweist.

Es versteht sich, dass die mindestens eine Strommesseinrichtung 110 auch außerhalb des Wechselrichters 300 angeordnet sein kann, je nachdem, welcher Stromwert wo gemessen werden soll. Es können mehrere Strommesseinrichtungen 110 vorgesehen sein, und der erfasste Stromwert kann auf erfassten Einzel-Strommessungen der mehreren Strommesseinrichtungen 110 basieren, z.B. ein Supremum, ein gleitender Durchschnitt, oder ein Quantil (z.B. ein Median) der Einzel-Strommessungen sein. Bei dem Stromwert kann es sich beispielsweise um einen am Maximum-Power-Point, MPP, gemessenen, von den Photovoltaik-Modulen 200 jeweils aktuell generierten Strom handeln.

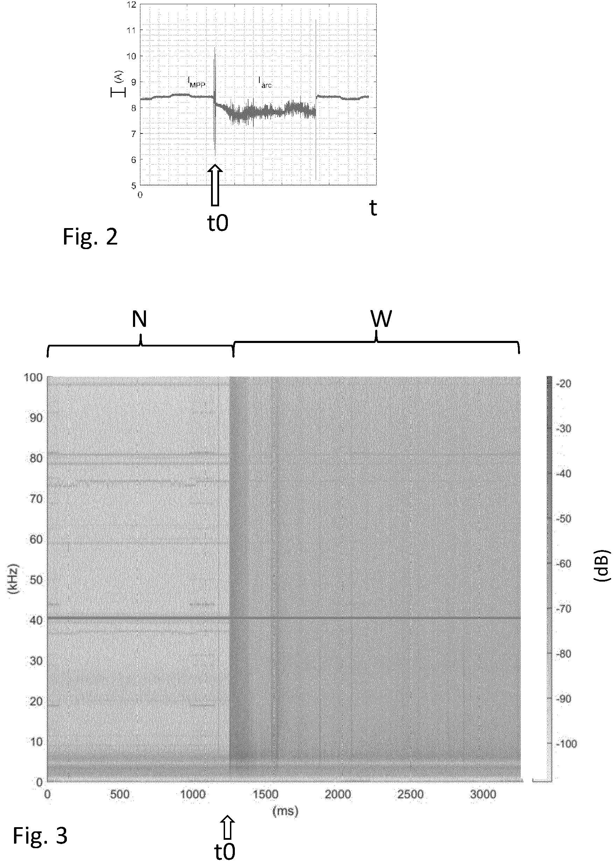

Fig. 2 zeigt einen beispielhaften Graphen, der einen Stromwert I in A (Ampere) als Funktion der Zeit t darstellt. Zunächst wird die Photovoltaik-Anlage 1000 am MPP betrieben, sodass der erfasste Stromwert $I_{MPP}$, also dem elektrischen Strom am MPP entspricht. Ab dem Zeitpunkt t0 liegt ein Lichtbogen 1 mit dem Lichtbogen-Strom $I_{arc}$ vor. Aus Fig. 2 ist ersichtlich, dass der vorangehende Stromwert $I_{MPP}$ als eine obere Grenze (bzw. ein Supremum) für die Höhe des nachfolgenden Lichtbogen-Strom $I_{arc}$ verwendbar ist. Dementsprechend kann beispielsweise der letzte erfasste Stromwert vor dem Auftreten eines detektierten Warnzustands (oder, mit anderen Worten, vor dem Detektieren des Warnzustands) erfasst werden, womit der mögliche Lichtbogen-Strom $I_{arc}$ sinnvoll abgeschätzt ist. Beispielsweise können in einem Puffer eine vorbestimmte Anzahl der jeweils letzten detektierten Stromwerte gespeichert werden (z.B. Stromwerte $I_{MPP}$ am Maximum-Power-Point, MPP), welche dann für das Erfassen des Stromwerts herangezogen werden.

Die Vorrichtung 100 umfasst außerdem ein Leistungs-Schätzungsmodul 120, welches dazu eingerichtet ist, einen Schätzwert für eine elektrische Leistung eines möglichen (oder: etwaigen) Lichtbogens 1 unter Verwendung eines Modells zu berechnen, wobei der erfasste Stromwert als eine Eingangsgröße des Modells verwendet wird. In Fig. 1 sind schematisch zwei Typen bzw. möglich Entstehungsorte von Lichtbögen 1 gezeigt: in der Reihenschaltung zwischen zwei Photovoltaik-Modulen 200, sowie zwischen einem Photovoltaik-Modul 200 und einem Wechselrichter 300.

Der erfasste Stromwert kann die einzige Eingangsgröße des Modells sein, oder eine von mehreren. Weitere Eingangsgrößen können beispielsweise eine Spannungsveränderung beim Auftreten des möglichen Lichtbogens 1, ein Hub des Leistungsdichtespektrums und/oder dergleichen mehr sein.

Das Leistungs-Schätzungsmodul 120 ist in der vorliegend beschriebenen Ausführungsform dazu eingerichtet, zunächst einen Schätzwert für die elektrische Spannung des möglichen Lichtbogens 1 zu berechnen, d.h., eine Spannung, die ein Lichtbogen 1 aufweisen würde, wenn aktuell ein solcher Lichtbogen 1 vorläge.

Aus der eingangs erwähnten wissenschaftlichen Veröffentlichung von J. Paukert kann beispielsweise nachfolgende Formel (1) entnommen werden, wonach

$$U_{\mathrm{arc}} = \left(20 + 0.534 x_{\mathrm{gap}}\right) I_{\mathrm{arc}}^{0.12}, \quad (1)$$

wobei $U_{arc}$ den Schätzwert für die elektrische Spannung des möglichen Lichtbogens 1 (engl. "arc") darstellt, und $I_{arc}$ den erfassten Stromwert, der hier (und im Folgenden) als elektrischer Strom des möglichen Lichtbogens 1 angenommen wird. Hierbei ist $x_{gap}$ der Elektrodenabstand in Millimetern, der bei einem spontan (außerhalb eines Teststands) auftretenden Lichtbogen 1 typischerweise unbekannt ist und daher durch einen fixen Schätzwert ersetzt werden kann, beispielsweise durch einen Schätzwert von 0. Aus Formel (1) ist ersichtlich, dass bei typischen Elektrodenabständen in typischen Photovoltaik-Anlagen 1000 die hierdurch entstehende Unsicherheit im einstelligen Prozentbereich liegt.

Demnach kann der Schätzwert $U_{arc}$ für die elektrische Spannung des möglichen Lichtbogens 1 zum Beispiel mit der nachfolgenden Formel (2) berechnet werden:

$$U_{\mathrm{arc}} = 20 \, I_{\mathrm{arc}}^{0.12}, \quad (2)$$

Mit anderen Worten kann der Schätzwert $U_{arc}$ für die elektrische Spannung des möglichen Lichtbogens 1 eine Potenz des erfassten Stromwerts, multipliziert mit einer Konstante, umfassen oder daraus bestehen.

Aus einem Modell aus der oben genannten wissenschaftlichen Veröffentlichung von H.M. Ayrton kann alternativ auch folgende Formel (3) abgeleitet werden:

$$U_{\mathrm{arc}} = A + B x_{\mathrm{gap}} + \frac{C + D x_{\mathrm{gap}}}{I_{\mathrm{arc}}}, \quad (3)$$

wobei **A** der Spannungsabfall über die Elektrode, **B** der Spannungsgradient, und **C** und **D** Konstanten sind, welche den nicht-linearen Impedanzverlauf des Lichtbogens 1 beschreiben, welche in der Regel empirisch ermittelt werden. Der Schätzwert $U_{arc}$ für die elektrische Spannung des möglichen Lichtbogens 1 kann somit (z.B. gemäß Formel (3)) als eine Summe berechnet werden, wobei der erfasste Stromwert $I_{arc}$ in einem Nenner eines der Summanden der Summe auftritt oder diesen Nenner bildet.

Es versteht sich, dass je nach geplantem Einsatzort und der Ausgestaltung der Photovoltaik-Anlage 1000 auch andere bekannte Formeln zur Berechnung des Schätzwerts $U_{arc}$ für die elektrische Spannung des möglichen Lichtbogens 1 verwendet werden können, beispielsweise aus der oben genannten wissenschaftlichen Veröffentlichung von Stokes und Oppenlander.

Aus dem Schätzwert $U_{arc}$ für die elektrische Spannung des möglichen Lichtbogens 1 und dem erfassten Stromwert als Schätzwert $I_{arc}$ für den elektrischen Strom des möglichen Lichtbogens 1 kann das Leistungs-Schätzungsmodul 120 gemäß

$$P_{arc=} U_{arc} I_{arc} \qquad (4)$$

den Schätzwert $P_{arc}$ für die elektrische Leistung des möglichen (oder: etwaigen) Lichtbogens 1 berechnen. Ein Modell für die Berechnung des Schätzwerts $P_{arc}$ kann somit aus einer Formel (oder einem Untermodell) für die Berechnung des Schätzwerts $U_{arc}$ für die elektrische Spannung des möglichen Lichtbogens 1 in Kombination mit Formel (4) bestehen, oder diese umfassen. Alternativ kann ein Modell für die Berechnung des Schätzwerts $P_{arc}$ für die elektrische Leistung des möglichen Lichtbogens 1 auch direkt eine Formel oder ein Untermodell für eine Leistungsberechnung sein oder aufweisen.

Die Vorrichtung 100 weist außerdem ein Detektionshöchstzeitdauer-Anpassungsmodul 130 auf, welches dazu eingerichtet ist, eine Detektionshöchstzeitdauer $T_{max}$ in Abhängigkeit von dem berechneten Schätzwert $P_{arc}$ für die elektrische Leistung anzupassen. Die Funktion der Detektionshöchstzeitdauer $T_{max}$ wurde im Vorangehenden bereits angeschnitten und wird im Folgenden noch detaillierter beschrieben werden.

Das Modell für das Berechnen des Schätzwerts $P_{arc}$ für die elektrische Leistung kann eine Mehrzahl von Kandidaten-Untermodellen verwenden, wobei jedes Kandidaten-Untermodell eine eigene Schätzung durchführt und der Schätzwert des Modells für die elektrische Leistung auf mindestens einer der Schätzungen der Kandidaten-Untermodelle basiert. Beispielsweise kann die größte Schätzung (d.h., das Maximum), welche von einem der Kandidaten-Untermodelle erzeugt wird, als Schätzwert des Modells verwendet werden. Möglich ist aber auch, dass der Schätzwert des Modell aus den Schätzungen der Kandidaten-Untermodelle berechnet wird, beispielsweise als deren gleitender Durchschnitt oder Median, oder als ein bestimmtes Quantil x (also z.B. ein Wert, unterhalb dessen 100*x% der Schätzungen der Kandidaten-Untermodelle liegen, wobei der Median der Spezialfall des 0,5-Quantils ist).

Gleichbedeutend kann auch eine Mehrzahl von Kandidaten-Untermodellen für das Erzeugen des Schätzwerts $U_{arc}$ für die elektrische Spannung des möglichen Lichtbogens 1 verwendet werden, wobei die Kandidaten-Untermodelle jeweils Schätzungen für $U_{arc}$ erzeugen, und der Schätzwert für $U_{arc}$, welcher daraufhin für die Berechnung des Schätzwerts für die Leistung $P_{arc}$ verwendet wird, aus den Schätzungen der Kandidaten-Untermodelle für $U_{arc}$ berechnet wird, beispielsweise als deren gleitender Durchschnitt oder Median, oder als ein bestimmtes Quantil x.

Die Vorrichtung 100 umfasst weiterhin auch noch ein Lichtbogen-Detektionsmodul 140, welches dazu eingerichtet ist, einen Warnzustand zu detektieren, welcher ein mögliches Auftreten eines Lichtbogens 1 in dem Photovoltaik-Feld anzeigt. Ein Warnzustand liegt mit anderen Worten z.B. dann vor, wenn aus Sicherheitsgründen davon ausgegangen werden muss, dass ein Lichtbogen 1 vorliegt, auch wenn nicht bekannt ist, ob dies tatsächlich der Fall ist.

Das Detektieren des Warnzustands durch das Lichtbogen-Detektionsmodul 140 kann gemäß beliebigen, aus dem Stand der Technik bekannten Verfahren zum Detektieren eines Lichtbogens 1 erfolgen und beispielsweise eine Fouriertransformation und eine Spektralanalyse umfassen.

Fig. 3 zeigt einen Graphen, welcher auf der vertikalen Achse Frequenzen (in kHz) elektrischer Signale in mindestens einer Leitung der Photovoltaik-Anlage 1000, auf der horizontalen Achse einen zeitlichen Verlauf (in ms), und in der Färbung von Punkten eine Intensität (in dB) der Signale einer bestimmten Frequenz zu einem bestimmten Zeitpunkt angibt, wobei eine dunklere Färbung eine höhere Intensität anzeigt. Die elektrischen Signale können beispielsweise in einer Minusleitung der Photovoltaik-Anlage 1000 (etwa in einer gemeinsamen Minusleitung) abgegriffen werden, wobei - jeweils topologieabhängig - auch andere und/oder mehrere Messpunkte möglich sind.

In Fig. 3 ist auf der vertikalen Achse beispielhaft und schematisch ein Frequenzbereich zwischen 0 kHz und 100 kHz dargestellt. Es versteht sich, dass auch ein breiterer, schmalerer, und/oder verschobener, Frequenzbereich (oder mehrere voneinander getrennte Unter-Frequenzbereiche) für die Erkennung eines Warnzustands W verwendet werden kann.

Die erfindungsgemäße Photovoltaik-Anlage 1000 kann vorteilhaft eine Powerline-Communication für Steuer- oder Kommunikationssignale aufweisen, ohne dass dies den Funktionen der Vorrichtung 100 irgendeinen Abbruch tut.

In Fig. 3 ist deutlich erkennbar, wie sich das allgemeine Frequenzverhalten in der Photovoltaik-Anlage 1000 zum Zeitpunkt t0 schlagartig verändert, und insbesondere die Intensitäten insgesamt deutlich höher ausfallen. Da Lichtbögen 1 typischerweise ein pinkes Rauschen (ähnlich dem "Weißen Rauschen") im elektromagnetischen Spektrum erzeugen, kann dies als ein Hinweis auf das Auftreten eines Lichtbogens 1 zum Zeitpunkt t0 angesehen werden. Dementsprechend kann das Lichtbogen-Detektionsmodul 140 dazu eingerichtet sein, zum Zeitpunkt t0 das Vorliegen eines Warnzustands W zu detektieren.

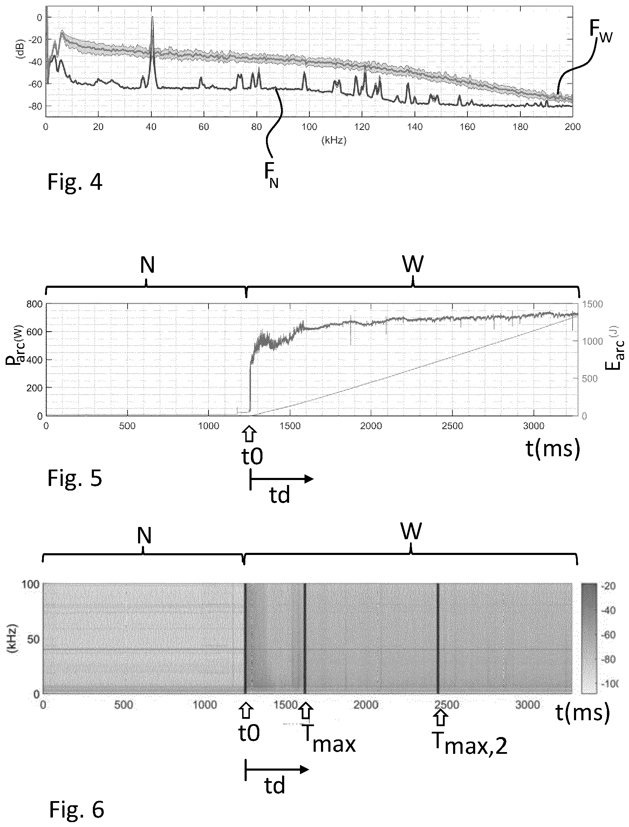

Fig. 4 zeigt beispielhaft zwei Graphen, von denen eine Leistungsdichtespektrum $F_N$ im Normalzustand N der Photovoltaik-Anlage 1000, und der andere ein Leistungsdichtespektrum $F_W$ im Warnzustand W der Photovoltaik-Anlage 1000 darstellt. Dementsprechend kann der Graph mit dem Frequenzspektrum $F_N$ beispielsweise als senkrechter Querschnitt durch Fig. 3 im Bereich des Normalzustands N z.B. bei 1200 ms, und der Graph mit dem Frequenzspektrum $F_W$ beispielsweise als senkrechter Querschnitt im Bereich des Warnzustands W z.B. bei 1700 ms betrachtet werden.

Typischerweise geben Normen vor, dass nicht unmittelbar beim Auftreten eines Warnzustands W (d.h., bei der Feststellung, dass möglicherweise ein Lichtbogen vorliegt), eine Sicherheitsprozedur ausgeführt werden muss, etwa ein Abschalten der Photovoltaik-Anlage 1000. Häufig wird, wie im Vorangehenden bereits erläutert wurde, stattdessen eine maximale Energiemenge $E_{max}$ zugestanden, d.h., dass eine von dem (möglichen, oder: vermeintlichen) Lichtbogen 1 abgegebene elektrische Energie $E_{arc}$ maximal den Wert $E_{max}$ erreichen darf, bevor die Sicherheitsprozedur ausgeführt werden muss.

Fig. 5 zeigt zwei beispielhafte Graphen, von denen einer die Leistung $P_{arc}$ des möglichen Lichtbogens 1 (linke vertikale Achse, in Watt) und der andere die insgesamt durch den Lichtbogen 1 abgegebene Energie $E_{arc}$ (rechte vertikale Achse, in Joule), jeweils als Funktion der Zeit darstellt. Die insgesamt abgegebene Energie $E_{arc}$ kann dabei durch Integrieren der Leistung $P_{arc}$ berechnet werden.

Erfindungsgemäß wird nun ausgenutzt, dass mit einem bekannten Schätzwert für die Leistung $P_{arc}$ des möglichen Lichtbogens 1 aus einer Vorgabe für die maximale Energiemenge $E_{max}$ durch das Detektionshöchstzeitdauer-Anpassungsmodul 130 die Detektionshöchstzeitdauer $T_{max}$ berechnet werden kann. Diese gibt somit an, wie lange ein Warnzustand W toleriert werden darf (oder: kann), ehe die geforderte Sicherheitsprozedur ausgelöst werden muss, wobei in einem einfachen Fall gelten kann:

$$T_{max} = \frac{E_{arc}}{U_{arc} I_{arc}} \quad (5),$$

wobei $E_{arc}$ eine Konstante, $U_{arc}$ der Schätzwert für die elektrische Spannung des möglichen Lichtbogens 1 und $I_{arc}$ der Schätzwert für den elektrischen Strom, gegeben durch den erfassten Stromwert (oder berechnet auf Basis des erfassten Stromwerts) des möglichen Lichtbogens 1 sind.

Fig. 6 zeigt eine Version des Graphen in Fig. 3, in welcher unter anderem zusätzlich die Detektionshöchstzeitdauer $T_{max}$ (im vorliegenden Beispiel einer von dem Lichtbogen 1 abgegebenen Energie $E_{arc}$=200 J entsprechend) mit einer senkrechten Linie eingezeichnet wurde.

Es versteht sich, dass erfindungsgemäß die Detektionshöchstzeitdauer $T_{max}$ (zumindest wenn aktuell kein Warnzustand W vorliegt, optional immer) durch das Detektionshöchstzeitdauer-Anpassungsmodul 130, insbesondere regelmäßig oder, besonders bevorzugt, kontinuierlich, angepasst wird, je nach dem aktuell erfassten Stromwert, der dementsprechend ebenfalls regelmäßig, oder bevorzugt kontinuierlich, erfasst (insbesondere gemessen) werden kann.

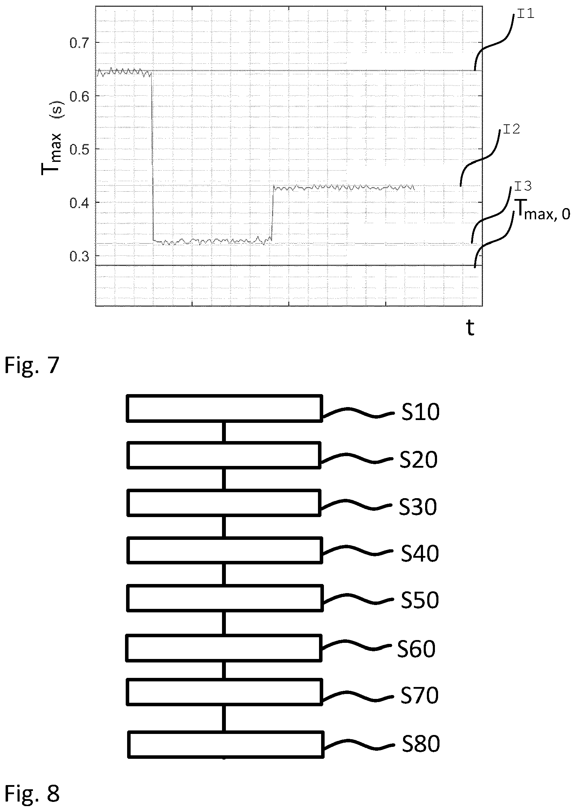

Fig. 7 zeigt beispielhaft einen Graphen, der darstellt, wie die Detektionshöchstzeitdauer $T_{max}$ je nach aktuell erfasstem Stromwert I1, I2, I3 entsprechend durch das Detektionshöchstzeitdauer-Anpassungsmodul 130 angepasst wird, mit I1<I2<I3. Es kann ein Detektionshöchstzeitdauer-Standardwert $T_{max,0}$ vorgesehen sein, welcher für die Detektionshöchstzeitdauer $T_{max}$ verwendet wird, wenn aktuell kein brauchbarer erfasster Stromwert vorliegt. Das Detektionshöchstzeitdauer-Anpassungsmodul 130 kann beispielsweise dazu eingerichtet sein, den Detektionshöchstzeitdauer-Standardwert $T_{max,0}$ zu verwenden, wenn er erfasste Stromwert nicht als plausibel eingestuft wird (d.h., vorbestimmte Plausibilitätsregeln nicht erfüllt), zu lange her ist (d.h. älter als eine vorbestimmte Zeitdauer ist), überhaupt kein erfasster Stromwert vorliegt (z.B. im Falle eines Kommunikationsfehlers) und/oder dergleichen mehr.

Die Vorrichtung 100 weist außerdem eine Zeitmesseinrichtung 150 auf, welche dazu eingerichtet ist, eine fortlaufende Zeitdauer td des detektierten Warnzustands W zu messen, oder, mit anderen Worten, zu messen, wie lange der detektierte Warnzustand W bereits anhält. Dies kann beispielsweise dadurch erfolgen, dass mit Beginn des Detektierens des Warnzustands W ein Zähler Z gestartet wird, der feste Zeitabstände D zählt (beispielsweise mit D im Bereich zwischen 1 und 5 Millisekunden, die Randwerte mit eingeschlossen), also etwa td = Z*D beginnend mit t0. Alternativ kann dies dadurch erfolgen, dass der absolute Zeitpunkt t0 des Detektierens des Warnzustands W festgehalten wird, und dieser festgehaltene absolute Zeitpunkt von einer jeweils aktuellen Zeit t abgezogen wird, d.h. td = t-t0.

Die Vorrichtung 100 weist außerdem eine Sicherheitseinrichtung 160 auf, welche dazu eingerichtet ist, eine Sicherheitsprozedur zum Zweck des Löschens des möglichen Lichtbogens 1 auszuführen, wenn die fortlaufend gemessene Zeitdauer td des detektierten Warnzustands W die Detektionshöchstzeitdauer $T_{max}$ erreicht, also td=$T_{max}$ wird. Bevorzugt wird somit keine Sicherheitsprozedur ausgelöst (oder lediglich eine andere, insbesondere mildere Sicherheitsprozedur ausgelöst), solange td $\leq T_{max}$. Insbesondere erfolgt vorzugsweise kein Abschalten eines Photovoltaik-Moduls 200 oder der Photovoltaik-Anlage 1000 insgesamt, solange td $\leq T_{max}$.

Wie Fig. 7 besonders gut verdeutlich wird somit die Sicherheitsprozedur verhältnismäßig früher ausgelöst, wenn ein verhältnismäßig großer Stromwert I3 erfasst wurde, und verhältnismäßig später ausgelöst, wenn ein verhältnismäßig kleiner Stromwert I1 erfasst wurde, da sich die Detektionshöchstzeitdauer $T_{max}$ jeweils entsprechend verändert.

Die Sicherheitsprozedur kann eine oder mehrere (aus dem Stand der Technik bekannte) Maßnahmen mit dem Zweck des Löschens des möglichen Lichtbogens 1 umfassen, bis hin zu einem Abschalten der Photovoltaik-Anlage 100. Die Sicherheitsprozedur kann jeweils das Aussenden einer Nachricht an eine zentrale Steuereinrichtung umfassen, beispielsweise an einen Virtuelles-Kraftwerk-Betreiber, an eine Wartungsperson und/oder dergleichen.

Es kann vorgesehen sein, dass die Sicherheitseinrichtung 160 dazu eingerichtet ist, das Messen der Zeitdauer td des detektierten Warnzustands W durch die Zeitmesseinrichtung 150 zurückzusetzen, wenn der detektierte Warnzustand W endet, d.h., nicht mehr weiter detektiert wird, oder anders ausgedrückt, wenn die Hinweise, welche auf das Auftreten eines Lichtbogens hingedeutet haben, nicht mehr länger (in hinreichendem Maße) vorhanden sind.

Vorteilhaft wird der Zeitraum während dem die Zeitdauer td des detektierten Warnzustands W zwischen 0 und der Detektionshöchstzeitdauer $T_{max}$ hochläuft, durch das Lichtbogen-Detektionsmodul 140 genutzt, um den detektierten Warnzustand W (weiter) zu verifizieren, d.h., festzustellen, ob tatsächlich ein Lichtbogen 2 vorliegt oder nicht. Hierzu können beispielsweise zusätzliche Messungen (etwa des Frequenzspektrums) vorgenommen oder zusätzliche Stromwerte erfasst werden, zusätzliche Modelle angewandt und deren Ergebnisse analysiert werden (z.B. ein Maschinenlernen-Modell wie etwa eine Künstliche-Intelligenz-Entität, beispielsweise ein künstliches neuronales Netzwerk), zeitaufwändigere Berechnungen als für das erste Detektieren des Warnzustands W vorgenommen werden, und/oder dergleichen mehr.

Ergibt das Verifizieren, dass tatsächlich kein Lichtbogen 2 vorliegt, wird der Warnzustand W vorzugsweise sofort beendet, sodass idealer Weise im Normalzustand N fortgefahren werden kann. Bleibt es trotz (oder: im Zuge) des Verifizierens dabei, dass ein Warnzustand W vorliegt (d.h. insbesondere, dass ein Lichtbogen 2 für möglich oder für wahrscheinlich gehalten wird), bleibt der detektierte Warnzustand W bestehen, und die Zeitdauer td wird weiterhin fortlaufend hochgezählt.

Es können auch mehrere Detektionshöchstzeitdauern $T_{max}$ bestimmt sein, wobei die Sicherheitseinrichtung 160 dazu eingerichtet ist, bei jeder der nacheinander erreichten Detektionshöchstzeitdauern $T_{max}$ eine andere und/oder zusätzliche und/oder erneute Sicherheitsprozedur auszulösen, typischerweise mit ansteigender Effektivität im Löschen des Lichtbogens 1 aber gleichzeitig mit stärkerem Eingriff in die Funktion der Photovoltaik-Anlage 1000.

In Fig. 6 ist beispielsweise neben der ersten Detektionshöchstzeitdauer $T_{max}$, welche hier einer (beispielhaften) Maximalenergie von $E_{arc}=200$ J entspricht, noch eine zweite Detektionshöchstzeitdauer $T_{max,2}$ eingezeichnet, welche hier einer (beispielhaften) Maximalenergie von $E_{arc}=750$ J entspricht. Somit kann die Sicherheitseinrichtung 160 dazu eingerichtet sein, zunächst, wenn die fortlaufend gemessene Zeitdauer td des Warnzustands W die erste Detektionshöchstzeitdauer $T_{max}$ erreicht (d.h., wenn td=$T_{max}$ wird), eine erste, mildere Sicherheitsprozedur auszuführen.

In dem Fall, dass diese Sicherheitsprozedur nicht ausreichend war, um den Warnzustand W zu beheben (d.h. es besteht weiterhin die Möglichkeit des Vorliegens eines Lichtbogens 1 in der Einschätzung des Lichtbogen-Detektionsmoduls 140), misst (oder: zählt) die Zeitmesseinrichtung 150 weiter. Wenn dann die fortlaufend gemessene Zeitdauer td des detektierten Warnzustands W die zweiten Detektionshöchstzeitdauer $T_{max,2}$ erreicht (d.h., td=$T_{max,2}$ wird), wird eine zweite, schärfere Sicherheitsprozedur ausgeführt, etwa eine Abschaltung der Photovoltaik-Anlage 1000 (z.B. unter Verwendung eines oder mehrerer Gleichstrom- und/oder Wechselstromtrenner), das automatische Anfordern einer Wartungsperson, und/oder dergleichen.

Demgegenüber kann es sich bei der (verhältnismäßig) milderen Sicherheitsprozedur beispielsweise um ein temporäres Reduzieren des Gleichstrom-Leistungsbezugs über die mit dem erfassten Stromwert assoziierten Leitungen (z.B. von den Photovoltaik-Modulen 200) handeln, beispielsweise auf einen Wert unterhalb eines Schwellwerts zwischen 200 mA und 300 mA (beispielsweise unterhalb eines Schwellwerts von 250 mA).

Sind mehrere Detektionshöchstzeitdauern $T_{max}$, $T_{max,2}$, jeweils verknüpft mit unterschiedlichen Sicherheitsprozeduren (d.h. sich in mindestens einer Sicherheitsprozedur unterscheidend), vorgesehen, werden bevorzugt alle vorgesehenen Detektionshöchstzeitdauern $T_{max}$, $T_{max,2}$, gleichzeitig angepasst.

Es kann jedoch auch vorgesehen sein, dass mindestens eine längere Detektionshöchstzeitdauer $T_{max,2}$ seltener angepasst wird als mindestens eine kürzere Detektionshöchstzeitdauer $T_{max}$. Beispielsweise kann vorgesehen sein, dass die mindestens eine längere Detektionshöchstzeitdauer $T_{max,2}$ erst angepasst wird, wenn ein Warnzustand W bereits für eine Zeitdauer td zwischen 0 und der mindestens einen kürzeren Detektionshöchstzeitdauer $T_{max}$ anhält.

Fig. 8 zeigt ein schematisches Flussdiagramm zur Erläuterung eines Verfahrens gemäß einer weiteren Ausführungsform der vorliegenden Erfindung, d.h. eines Verfahrens zum Betreiben einer Photovoltaik-Anlage 1000.

Das Verfahren kann insbesondere mit der erfindungsgemäßen Vorrichtung 100 und/oder in der erfindungsgemäßen Photovoltaik-Anlage 1000 durchgeführt werden, aber auch unabhängig davon. Dementsprechend kann das Verfahren gemäß allen in Bezug auf die erfindungsgemäße Vorrichtung 100 und die erfindungsgemäße Photovoltaik-Anlage 1000 beschriebenen Optionen, Varianten, und Verfeinerungen angepasst werden und umgekehrt. Dementsprechend wird bei der Beschreibung des Verfahrens gemäß Fig. 8 auch auf Bezugszeichen der vorangehenden Fig. 1-7 zurückgegriffen, ohne dass dies einschränkend verstanden werden soll.

In einem Schritt S10 wird ein Stromwert in der Photovoltaik-Anlage 1000 erfasst, beispielsweise wie anhand der Funktion der Strommesseinrichtung 110 im Vorangehenden erläutert wurde. Der erfasste Stromwert wird bevorzugt regelmäßig oder kontinuierlich erfasst (insbesondere gemessen), zumindest während kein Warnzustand W vorliegt, und ist besonders bevorzugt ein durch die Photovoltaik-Anlage 1000 erzeugter Stromwert zu einem Zeitpunkt vor dem Auftreten des detektierten Warnzustands W. Im Falle von mehreren Modulsträngen der Photovoltaik-Anlage 1000 kann das vorliegende Verfahren für alle Modulstränge gemeinsam, oder für jeden Modulstrang einzeln durchgeführt werden. Dementsprechend kann der erfasste Stromwert auch beispielsweise ein Stromwert an einem der Modulstränge sein.

In einem Schritt S20 wird ein Schätzwert $P_{arc}$ für eine elektrische Leistung eines möglichen Lichtbogens 1 in der Photovoltaik-Anlage 1000 unter Verwendung eines Modells berechnet, wobei der erfasste Stromwert als eine Eingangsgröße (entweder die einzige, oder eine von mehreren Eingangsgrößen) des Modells verwendet wird, etwa wie im Vorangehenden mit Bezug auf das Leistungs-Schätzungsmodul 120 beschrieben wurde.

In einem Schritt S30 wird (mindestens) eine Detektionshöchstzeitdauer $T_{max}$, $T_{max,2}$ in Abhängigkeit von dem berechneten Schätzwert $P_{arc}$ für die elektrische Leistung angepasst, beispielsweise wie im Vorangehenden mit Bezug auf das Detektionshöchstzeitdauer-Anpassungsmodul 130 erläutert wurde. Dies kann insbesondere regelmäßig oder kontinuierlich erfolgen, zumindest wenn aktuell kein Warnzustand W vorliegt (d.h. kein Warnzustand W detektiert wird).

In einem Schritt S40 wird ein Warnzustand W detektiert, welcher ein mögliches Auftreten eines Lichtbogens 1 in der Photovoltaik-Anlage 1000 anzeigt, etwa wie dies mit Bezug auf das Lichtbogen-Detektionsmodul 140 im Vorangehenden erläutert wurde. Wie bereits erläutert wurde, kann dazu eines der im Stand der Technik bekannten Verfahren angewandt werden, etwa basierend auf einer Spektralanalyse des Stroms aus der Photovoltaik-Anlage 1000 (genauer gesagt: aus einem oder mehreren Photovoltaik-Modulen 200) oder dergleichen.

In einem Schritt S50 wird eine Zeitdauer td des detektierten Warnzustands W, sofern einer vorliegt, fortlaufend gemessen, etwa wie dies im Vorangehenden mit Bezug auf die Zeitmesseinrichtung 150 erläutert wurde.

In einem Schritt S60 wird der Zeitraum während dem die Zeitdauer td des detektierten Warnzustands W zwischen 0 und der Detektionshöchstzeitdauer $T_{max}$ hochläuft, genutzt, um den detektierten Warnzustand W zu verifizieren, d.h., um mit höherer Genauigkeit (oder sogar mit Sicherheit) festzustellen (oder zumindest den bestmöglichen Versuch dafür zu unternehmen), ob tatsächlich ein Lichtbogen 2 vorliegt oder nicht. Hierzu können beispielsweise zusätzliche Messungen (etwa des Frequenzspektrums) vorgenommen werden, zusätzliche Modelle angewandt und deren Ergebnisse analysiert werden (z.B. ein Maschinenlernen-Modell wie etwa eine Künstliche-Intelligenz-Entität, beispielsweise ein künstliches neuronales Netzwerk), zeitaufwändigere Berechnungen als für das erste Detektieren S40 des Warnzustands W vorgenommen werden, und/oder dergleichen mehr. Das Verifizieren S60 kann beispielsweise ebenfalls durch das Lichtbogen-Detektionsmodul 140 erfolgen.

Ergibt das Verifizieren S60, dass tatsächlich kein Lichtbogen 2 vorliegt, wird der Warnzustand W vorzugsweise sofort beendet, sodass idealer Weise im Normalzustand N fortgefahren werden kann - siehe auch Schritt S80 im Folgenden. Das Verifizieren S60 erfolgt vorzugsweise durchgehend bis zum Erreichen der Detektionshöchstzeitdauer $T_{max}$, sodass jede zulässige Chance genutzt wird, das Auslösen einer unnötigen Sicherheitsprozedur zu vermeiden. Während des Verifizierens S60 können somit fortlaufend Daten aggregiert werden, um regelmäßig (oder: iterativ) ein immer verlässlicheres Ergebnis zu produzieren.

Bleibt es trotz (oder: im Zuge) des Verifizierens S60 dabei, dass ein Warnzustand W vorliegt (d.h. insbesondere, dass ein Lichtbogen 2 für möglich oder für wahrscheinlich gehalten wird), bleibt der detektierte Warnzustand W bestehen, und die Zeitdauer td wird weiterhin (im beständig weiterlaufenden Schritt S50) fortlaufend hochgezählt. Bei einer optionalen Variante kann, falls während des Verifizierens S60 das Vorliegen des Lichtbogens 2 mit Sicherheit festgestellt wurde (oder mit einer Wahrscheinlichkeit oberhalb eines Schwellwerts), auch eine sofortige Auslösung einer Sicherheitsprozedur erfolgen.

In einem Schritt S70 wird eine Sicherheitsprozedur, insbesondere zum Zweck des Löschens des möglichen Lichtbogens 1, ausgelöst, wenn die fortlaufend gemessene Zeitdauer td des detektierten Warnzustands W die Detektionshöchstzeitdauer $T_{max}$ erreicht, etwa wie dies im Vorangehenden mit Bezug auf die Sicherheitseinrichtung 160 beschrieben wurde. Bei der Sicherheitsprozedur kann es sich beispielsweise um ein Herunterregeln des von einem oder mehreren (oder allen) Photovoltaik-Modulen 200 erzeugten Stroms, um ein Abschalten eines oder mehrerer (oder aller) Stränge der Photovoltaik-Anlage 100 oder der gesamten Photovoltaik-Anlage 100 oder dergleichen handeln.

Während des Warnzustands, solange die Detektionshöchstzeitdauer $T_{max}$ noch nicht erreicht wurde, kann beispielsweise mit dem Betrieb der Photovoltaik-Anlage 1000 unverändert fortgefahren werden. Auf diese Weise kann, falls sich der Warnzustand W doch noch als eine falsch-positive Detektion herausstellt, verhindert werden, dass der Betrieb der Photovoltaik-Anlage 1000 störend eingeschränkt wird.

In einem Schritt S80 wird das Messen S50 der Zeitdauer td des detektierten Warnzustands W zurückgesetzt, wenn der detektierte Warnzustand W endet, etwa wie dies im Vorangehenden mit Bezug auf die Sicherheitseinrichtung 160 beschrieben wurde. Somit wird die Photovoltaik-Anlage 1000 wieder in den Anfangszustand (den Normalzustand N) versetzt, wenn nicht länger ein Warnzustand W detektiert wird, und das Verfahren kann fortlaufend weiter fortgeführt werden. Vorzugsweise wird immer während des Normalzustands N die Detektionshöchstzeitdauer $T_{max}$ fortlaufend (oder: dynamisch) angepasst, während des Warnzustands W dann aber die zuletzt bestimmte Detektionshöchstzeitdauer $T_{max}$ festgehalten und verwendet.

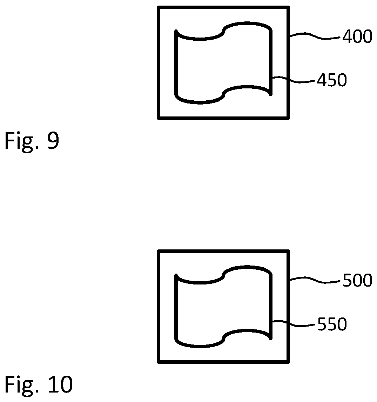

Fig. 9 zeigt ein schematisches Blockschaltbild eines Computerprogrammprodukts 400 gemäß einer Ausführungsform der vorliegenden Erfindung. Das Computerprogrammprodukt 400 umfasst ausführbaren Programmcode 450, welcher dazu eingerichtet ist, wenn er ausgeführt wird, das Verfahren gemäß einer Ausführungsform der vorliegenden Erfindung durchzuführen, beispielsweise gemäß Fig. 8.

Fig. 10 zeigt ein schematisches Blockschaltbild eines nicht-flüchtigen computerlesbaren Datenspeichermediums 500 gemäß einer Ausführungsform der vorliegenden Erfindung. Das Datenspeichermedium 500 umfasst ausführbaren Programmcode 550, welcher dazu eingerichtet ist, wenn er ausgeführt wird, das Verfahren gemäß einer Ausführungsform der vorliegenden Erfindung durchzuführen, beispielsweise gemäß Fig. 8.

Das nicht-flüchtige computerlesbare Datenspeichermedium 300 kann beispielsweise als ein Halbleiterspeicher, z. B. ein SSD-Speicherstein ausgebildet sein oder einen solchen aufweisen. Das Datenspeichermedium 300 kann auch eine CD, DVD, Blu-Ray oder eine magnetische Speichervorrichtung aufweisen oder umfassen.

## Patentansprüche

1. Verfahren zum Betreiben einer Photovoltaikanlage (1000), mit den Schritten:

   Erfassen (S10) eines Stromwerts in der Photovoltaik-Anlage (1000);
   Berechnen (S20) eines Schätzwerts für eine elektrische Leistung eines möglichen Lichtbogens (1) in der Photovoltaik-Anlage (1000) unter Verwendung eines Modells, wobei der erfasste Stromwert als eine Eingangsgröße des Modells verwendet wird;
   Anpassen (S30) einer Detektionshöchstzeitdauer ($T_{max}$, $T_{max,2}$) in Abhängigkeit von dem berechneten Schätzwert für die elektrische Leistung;
   Detektieren (S40) eines Warnzustands (W), welcher ein mögliches Auftreten eines Lichtbogens (1) in der Photovoltaik-Anlage (1000) anzeigt;

   Fortlaufendes Messen (S50) einer Zeitdauer (td) des detektierten Warnzustands (W);
   Auslösen (S70) einer Sicherheitsprozedur, wenn die fortlaufend gemessene Zeitdauer (td) des detektierten Warnzustands (W) die Detektionshöchstzeitdauer ($T_{max}$, $T_{max,2}$) erreicht; und
   Zurücksetzen (S80) des Messens (S50) der Zeitdauer (td) des detektierten Warnzustands (W), wenn der detektierte Warnzustand (W) endet.

2. Verfahren nach Anspruch 1,
   wobei die Detektionshöchstzeitdauer ($T_{max}$, $T_{max,2}$), zumindest wenn kein Warnzustand (W) detektiert ist, kontinuierlich angepasst wird.

3. Verfahren nach Anspruch 1 oder 2,
   wobei in dem Modell unter Verwendung des erfassten Stromwerts als Eingangsgröße ein Schätzwert für die elektrische Spannung des möglichen Lichtbogens (1) ermittelt wird, und der Schätzwert für die elektrische Leistung unter Verwendung des erfassten Stromwerts und des Schätzwerts für die elektrische Spannung berechnet wird, insbesondere durch deren Multiplikation.

4. Verfahren nach einem der Ansprüche 1 bis 3,
   wobei der erfasste Stromwert die einzige variable Eingangsgröße des Modells ist.

5. Verfahren nach einem der Ansprüche 1 bis 4,
   wobei das Modell für das Berechnen des Schätzwerts für die elektrische Leistung eine Mehrzahl von Kandidaten-Untermodellen verwendet, wobei jedes Kandidaten-Untermodell eine eigene Schätzung durchführt und der Schätzwert des Modells für die elektrische Leistung auf mindestens einer der Schätzungen der Kandidaten-Untermodelle basiert.

6. Verfahren nach einem der Ansprüche 1 bis 5,
   wobei die Detektionshöchstzeitdauer ($T_{max}$, $T_{max,2}$) derart angepasst wird, dass durch ein Produkt des Schätzwerts für die elektrische Leistung des möglichen Lichtbogens mit der Detektionshöchstzeitdauer ($T_{max}$, $T_{max,2}$) ein vorgegebener Elektrische-Energie-Schwellwert nicht überschritten wird.

7. Verfahren nach einem der Ansprüche 1 bis 6,
   wobei der Stromwert an einem Eingang eines Wechselrichters (300) und/oder einer Modulelektronik und/oder eines Schutzgeräts der Photovoltaik-Anlage (1000) erfasst wird.

8. Verfahren nach Anspruch 7,
   wobei der erfasste Stromwert ein durch die Photovoltaik-Anlage (1000) erzeugter Stromwert zu einem Zeitpunkt vor dem Auftreten des detektierten Warnzustands (W) ist.

9. Verfahren nach Anspruch 7 oder 8,
wobei der Stromwert regelmäßig oder kontinuierlich erfasst wird, der Schätzwert für die elektrische Leistung regelmäßig oder kontinuierlich berechnet wird, und die Detektionszeit regelmäßig oder kontinuierlich angepasst wird.

10. Verfahren nach einem der Ansprüche 1 bis 9,
außerdem umfassend ein Verifizieren (S60) des detektierten Warnzustands (W) in einem Zeitraum während dem die Zeitdauer (td) des detektierten Warnzustands (W) zwischen null und der Detektionshöchstzeitdauer ($T_{max}$) beträgt, wobei bevorzugt der Warnzustand (W) beendet wird, falls das Verifizieren (S60) ergibt, dass tatsächlich kein Lichtbogen (2) vorliegt.

11. Vorrichtung (100) zum Betreiben einer Photovoltaik-Anlage (1000), umfassend:

eine Strommesseinrichtung (110), welche dazu eingerichtet ist, einen Stromwert zu erfassen;
ein Leistungs-Schätzungsmodul (120), welches dazu eingerichtet ist, einen Schätzwert für eine elektrische Leistung eines möglichen Lichtbogens (1) unter Verwendung eines Modells zu berechnen, wobei der erfasste Stromwert als eine Eingangsgröße des Modells verwendet wird;
ein Detektionshöchstzeitdauer-Anpassungsmodul (130), welches dazu eingerichtet ist, eine Detektionshöchstzeitdauer ($T_{max}$, $T_{max,2}$) in Abhängigkeit von dem berechneten Schätzwert für die elektrische Leistung anzupassen;
ein Lichtbogen-Detektionsmodul (140), welches dazu eingerichtet ist, einen Warnzustand (W) zu detektieren, welcher ein mögliches Auftreten eines Lichtbogens (1) in der Photovoltaik-Anlage anzeigt (1000);
eine Zeitmesseinrichtung (150), welche dazu eingerichtet ist, eine fortlaufende Zeitdauer (td) des detektierten Warnzustands (W) zu messen; und
eine Sicherheitseinrichtung (160), welche dazu eingerichtet ist:

- eine Sicherheitsprozedur zum Zweck des Löschens des möglichen Lichtbogens (1) auszuführen, wenn die fortlaufend gemessene Zeitdauer (td) des detektierten Warnzustands (W) die Detektionshöchstzeitdauer ($T_{max}$, $T_{max,2}$) erreicht und
- das Messen der Zeitdauer (td) des detektierten Warnzustands (W) durch die Zeitmesseinrichtung (160) zurückzusetzen, wenn der detektierte Warnzustand (W) endet.

12. Vorrichtung (100) nach Anspruch 11, wobei

die Strommesseinrichtung (110) dazu eingerichtet ist, den Stromwert regelmäßig oder kontinuierlich zu erfassen;
das Leistungs-Schätzungsmodul (120) dazu eingerichtet ist, den Schätzwert für die elektrische Leistung des möglichen Lichtbogens (1) regelmäßig oder kontinuierlich unter Verwendung des erfassten Stromwerts zu berechnen; und/oder
das Detektionshöchstzeitdauer-Anpassungsmodul (130) dazu eingerichtet ist, die Detektionshöchstzeitdauer ($T_{max}$, $T_{max,2}$) in Abhängigkeit von dem berechneten Schätzwert für die elektrische Leistung regelmäßig oder kontinuierlich anzupassen.

13. Wechselrichter (300), umfassend die Vorrichtung nach einem der Ansprüche 11 oder 12.

14. Photovoltaik-Anlage (1000), umfassend die Vorrichtung (100) nach einem der Ansprüche 11 oder 12 und/oder den Wechselrichter nach Anspruch 13.

15. Computerprogrammprodukt (400), umfassend ausführbaren Programmcode (450), welcher, wenn er von einer Recheneinrichtung ausgeführt wird, das Verfahren gemäß einem der Ansprüche 1 bis 10 durchführt.

Fig. 1

Fig. 2

Fig. 3

Fig. 4

Fig. 5

Fig. 6

Fig. 7

Fig. 8

400

450

Fig. 9

500

550

Fig. 10

Europäisches
Patentamt

European
Patent Office

Office européen
des brevets

# EUROPÄISCHER RECHERCHENBERICHT

Nummer der Anmeldung

EP 24 17 2027

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 117 421 651 A (UNIV HEBEI TECHNOLOGY; PEOPLE ELECTRIC APPLIANCE GROUP CO LTD) 19. Januar 2024 (2024-01-19) * Ansprüche 1-10; Abbildungen 2-10 * - - - - - | 1-15 | INV. H02S50/10 |
| X | CN 115 021 209 A (ELECTRIC POWER SCIENT RES INST STATE GRID JIANGXI ELECTRIC POWER CO LT) 6. September 2022 (2022-09-06) * Ansprüche 1-4; Abbildungen 1-5 * - - - - - | 1-15 | |

RECHERCHIERTE SACHGEBIETE (IPC)

H02S

Der vorliegende Recherchenbericht wurde für alle Patentansprüche erstellt

| Recherchenort | Abschlußdatum der Recherche | Prüfer |
|---|---|---|
| Den Haag | 24. Januar 2025 | Boero, Mauro |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 2027

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2025

| Im Recherchenbericht angeführtes Patentdokument | Datum der Veröffentlichung | Mitglied(er) der Patentfamilie | Datum der Veröffentlichung |
|---|---|---|---|
| CN 117421651 A | 19-01-2024 | KEINE | |
| CN 115021209 A | 06-09-2022 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- The Electric Arc. *D. Van Nostrand Company*, 1902
- **J. PAUKERT**. The arc voltage and arc resistance of IV fault Arcs. *Proceedings of the 7th International Symposium on Switching Arc Phenomena*, 1993, 49-51

- **VON A. D. STOKES** ; **W. T. OPPENLANDER**. Electric arcs in open air. *Journal of Physics D: Applied Physics*, 1991, 26-35